Europäisches Patentamt

(19) European Patent Office

Office européen des brevets

(11) Publication number: **0 078 072**
**B1**

(12) EUROPEAN PATENT SPECIFICATION

(45) Date of publication of patent specification: **17.12.86**

(51) Int. Cl.⁴: **G 01 N 29/06, G 01 M 3/00**

(21) Application number: **82201203.5**

(22) Date of filing: **10.09.82**

(54) A centering apparatus for a measuring probe.

(30) Priority: **15.09.81 NL 8104262**

(43) Date of publication of application:
**04.05.83 Bulletin 83/18**

(45) Publication of the grant of the patent:
**17.12.86 Bulletin 86/51**

(84) Designated Contracting States:
**BE DE FR GB IT**

(56) References cited:
**DE-A-2 210 356**
**GB-A-2 020 023**
**US-A-3 508 436**
**US-A-4 218 923**

(73) Proprietor: **Nucon Engineering & Contracting B.V.**
**Aemstelborgh Weesperzijde 150**
**NL-1097 DS Amsterdam (NL)**

(72) Inventor: **Versluis, Ronald**
**Doornenburg 192**
**NL-2402 KK Alphen a/d Rijn (NL)**

(74) Representative: **Urbanus, Henricus Maria, Ir. et al**
**c/o Vereenigde Octrooibureaux P.O.Box 87930**
**NL-2508 DH Den Haag (NL)**

Courier Press, Leamington Spa, England.

## Description

The invention relates to an apparatus for movably carrying monitoring means within the interior of a pipe-shaped body comprising: a first bogie assembly; a second bogie assembly; wherein each of said assemblies includes a support, a set of arms pivotally coupled thereto and mounted for pivotal movement in unison, each of said arms having wheel means rotatably mounted at its free end, and a spring biased mechanism commonly coupled to its associated set of arms for exerting such resilient forces thereon that a pivotal movement of said arms in a direction towards the longitudinal axis of said support and caused by an internal pipe surface portion, is counteracted; and said monitoring means are adapted for transmitting and receiving a scanning beam of radiation for monitoring purposes.

An apparatus of the afore-mentioned type is known from US patent 4,218,923.

Such known apparatus has its bogie assemblies adapted to maintain the longitudinal axis of an elongated bogie member included in said apparatus to be substantially coaxial with the central axis of the pipe-shaped body under examination. However, this prior art fails to provide a sufficiently compact system for use within the interior of pipe line sections having a much smaller internal diameter. Moreover in case such known system has to be moved through relatively sharp bends, the exiter/transponder included in such a system no longer is maintained to be substantial coaxial with the central axis of the pipe line section under consideration.

It is an object of the subject invention to provide an apparatus of the above-defined type which can be effectively used in conjunction with pipe line configurations including pipe line sections having a relatively small internal diameter, i.e. an order of magnitude of about 14 mm and/or a relatively small radius of curvature.

An apparatus according to the invention is characterized thereby that each one of said arms is mounted for pivotal movement relative to its associated support in a plane which is extending transversely relative to said longitudinal axis of said support; and said monitoring means comprises a transducer stationary mounted relative to said support and adapted for transmitting and receiving said beam of radiation, and a reflector spaced at a predetermined distance from said transducer and mounted for rotation around said longitudinal axis, said reflector being positioned midway between the two spaced transverse planes extending through the respective centers of rotation of said wheel means, said reflector being further arranged for defining a transmission path for said beams of radiation having a portion extending substantially perpendicular to said longitudinal axis.

With a structure of an apparatus of the subject invention the longitudinal distance between opposing wheel means of the two spaced bogie assemblies can be made relatively short, while the center of the reflector is maintained to be accurately coaxial with the central axis of the pipe line section under examination, thereby improving the accuracy and reproductiveness of the measuring results derived from the monitoring means.

From a book "Werkstoffprüfung mit Ultraschall" by Josef and Herbert Krautkrämer, more in particular page 495 it is known per se to employ a monitor assembly including a transducer and a reflector disposed at a predetermined distance from said transducer for inspection of a hollow tube section wherein a beam path is defined having a portion extending substantially perpendicular to the central axis of the pipe line section under examination. However, this book is silent as to any structural means for movably carrying such composite monitor means within pipe line sections having a relatively small internal diameter and/or a relatively small radius of curvature. Monitoring means that can be used within the scope of the subject invention may for instance be based on Eddyflow and/or ultrasonic inspection methods for internal pipe or tube inspections.

More in particular an apparatus of the invention is characterized thereby that each one of said spring biased mechanisms include a spring extending in a plane transverse relative to said longitudinal axis for exerting resilient forces in a transverse direction relative to said axis.

For ensuring that the reflector center is maintained to be accurately coaxial with the central axis of a pipe line section having an oval-cross-section an apparatus of the subject invention is further characterized thereby that each one of said bogie assemblies includes three arms.

In summary the subject invention provides an apparatus which by its design effectively centers monitoring means within the interior of pipe lines having a relatively small internal diameter and/or a relatively small radius of curvature.

Thereby it is ensured that the radiation beam paths along which the transmitted and reflected beams propagate when the apparatus is transferred through a complicated pipe line system such as for instance included in a steam generator, are maintained substantially constant in length. Consequently accurate and reliable measurements as to the pipe line dimensions, in particular pipe line wall thickness, can be carried out. This is of paramount importance for effective surveyance of such a pipe line system to anticipate fatal damage of a pipe line section.

Without being restricted thereto the invention will be described more in detail by reference to a system wherein the monitoring means include a transducer for ultrasonic vibrations. Such an embodiment of the invention will be described in the following with reference to the accompanying drawings, in which:

Fig. 1 is a partial cross-section on the line I—I of the embodiment shown in fig. 2 of a centering mechanism according to the invention with an associated transducer and reflector;

Fig. 2 is a cross-section on the line II—II of the embodiment shown in Fig. 1; and

Fig. 3 diagrammatically shows the principle underlying the present invention.

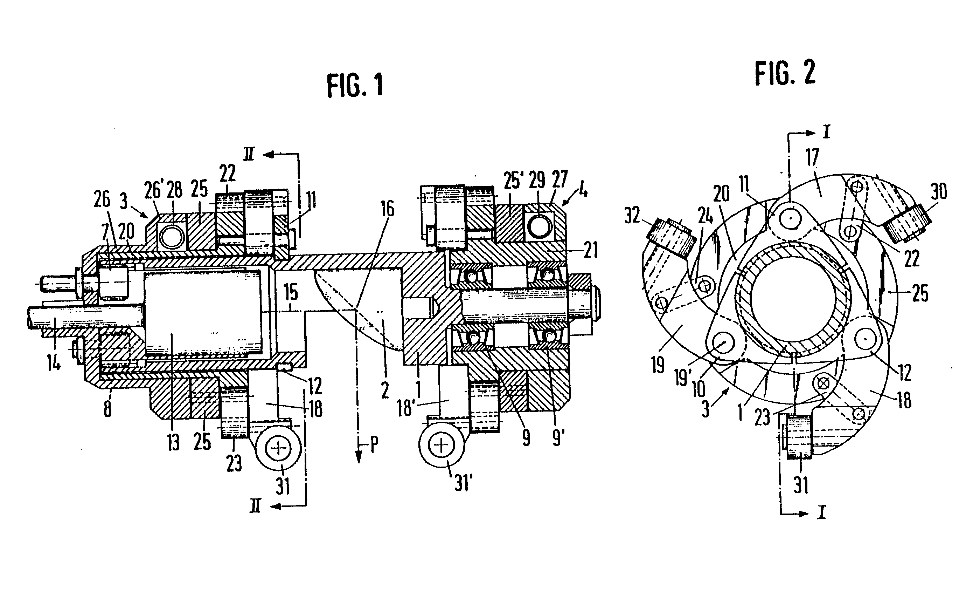

The embodiment of a centering apparatus according to the invention shown in fig. 1 and 2 comprises a frame having a reflector carrier 1 rotatably carried therein for a reflector 2 fixedly mounted therein. The frame furthermore comprises a first centering unit 3 and a second centering unit 4, which centering units, in a manner to be further defined, are interconnected to a mechanical unit. The reflector carrier 1 is mounted rotatably in the frame comprising a cylindrical housing 26 by means of three pinions rotatable in the unit 3, only two of which, 7 and 8, are shown in fig. 1. Said pinions are in engagement with an internal gear of the reflector carrier 1 comprising a hollow cylindrical portion. Furthermore, said reflector carrier is rotatably carried by the ball bearings 9 and 9', which are mounted in the centering unit 4. By means of a set of bearing retaining pieces such as 10, 11 and 12, mounted preferably rotatably on the centering unit 3 and extending in a recess extending along the outer circumference of the reflector carrier 1, it is prevented that said carrier together with the centering unit 4 rotatably connected thereto will shift in axial direction relative to the centering unit 3; moreover, said pieces 10, 11 and 12 function together as a supporting bearing for the reflector carrier 1. So, the reflector carrier 1 likewise functions as a connecting element, so that the two centering units 3 and 4 are connected to a mechanical unit.

In the interior of the centering unit 3 and the reflector carrier 1 furthermore there is fixedly connected to the frame an ultrasonic transducer 13 connected to an electric cable 14. Said transducer is arranged in such a way that a beam of ultrasonic vibrations transmitted, respectively received thereby along the longitudinal axis 15 of the assembly, is directed towards, respectively from the center 16 of the reflector 2. Said reflector 2 furthermore is arranged and designed in such a way that a beam of ultrasonic vibrations impinging thereon from the transducer 13 is deflected at an angle of e.g. substantially 90°, as indicated by the arrow P in fig. 1.

The pinion 7 is fitted with a drive shaft projecting beyond the centering unit 3, which drive shaft is adapted to be coupled to a motor (not shown) disposed at that side of the centering unit 3. When said pinion is brought in rotation by said motor, the reflector carrier 1 and thereby the reflector 2 is brought in rotation via the internal gear of said reflector carrier. When the transducer receives electric signals via the cable 14, so that said transducer transmits ultrasonic vibrations, it is achieved that in directions e.g. perpendicular to the longitudinal axis, a beam of ultrasonic vibrations is swung round relative to said axis.

Each centering unit furthermore is provided with a set of centering arms, three in the embodiment shown, 17, 18 and 19, as represented in fig. 2 for centering unit 3. The centering arms constituting one set are pivotal in synchronism in a plane extending transversely to the longitudinal axis 15 attached to the centering unit 3, respectively 4, viz. on that portion 20, respectively 21 within which the reflector carrier 1 is adapted to rotate. In fig. 2 the pivot point of the centering arm 19 is indicated by 19'. Each of the centering arms of a set is coupled via an associated steering link 22, 23 and 24 (fig. 2) to a coupling means 25, respectively 25' common for the respective set. Each steering link is pivotally coupled at its one end to the associated centering arm, and at its other end to the associated coupling means. Each coupling means 25, respectively 25' is rotatable about the associated frame portion 20 respectively 21. In a clamping ring 26', 27 fixedly connected to the frame portion 20, 21, there is mounted a pressure spring 28, 29 extending along a part of the circumference, the one end of which is secured to the associated coupling ring and the other end is secured to the associated clamping means. Such a pressure spring is thus operative for pressing via the respective coupling means and the steering links coupled thereto, the associated centering arms in outward direction into an extreme position (fig. 2).

At the free end of each centering arm there is rotatably mounted a supporting member; such as a pulley or bearing roller such 30, 31 and 32 (fig. 2). In fig. 1 the bearing roller of the centering unit 4 disposed opposite the bearing roller 31 is indicated by 31'. The centering apparatus is movably carried by means of said supporting means in the interior of a tube or pipe to be inspected.

The reflector is arranged with respect to the two sets of bearing rollers in such way that the reflector center 16 is present on the longitudinal axis 15 halfway between the two sets of bearing rollers of which fig. 1 only shows rollers 31 and 31'.

In the above described construction such a spring force is exerted on each centering arm by the associated pressure spring that a pivoting movement of the centering arm oriented towards the frame and produced by the interior pipe surface is counteracted. On account of the mutual coupling via the associated coupling means and the associated steering links, the centering arms of one set will furthermore be capable of performing a pivoting movement inclusively in synchronism.

Through a centering apparatus which is thus designed it is achieved that a beam of ultrasonic vibrations transmitted by the transducer, both with pipes having an oval cross-section and with pipes having a bent configuration, will impinge on the internal pipe wall always at the same angle, e.g. 90°.

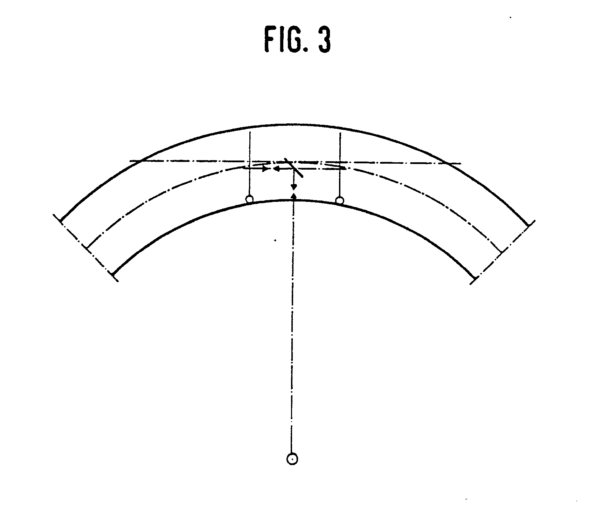

Fig. 3 illustrates the principle of the invention with reference to the situation wherein a centering apparatus according to the invention is disposed in a bent pipe section. As a result of the construction of the centering apparatus will then always apply and in particular in case of ovality of the pipe, that the longitudinal axis of the apparatus, i.e. the axis along which the beam of ultrasonic vibrations impinges on the centre of the reflector, extends parallel to the imaginary tangent of the centre of the arc portion of the pipe axis which is bounded between the bearing rollers of the two sets of carrier arms. In other words, the reflector-deflected beam of ultrasonic vibrations for instance in case of a required perpendicular impingement, will always be oriented according to the radius of curvature of the above arc portion, i.e. the emitted beam of ultrasonic vibrations impinges on the pipe wall in situ always perpendicularly.

The invention is not restricted to the embodiment described in connection with fig. 1 and 2.

For instance, it is possible to dispense with the reflector carrier 1 with internal gear and the coacting pinions, and to interconnect the centering units 3 and 4, in situ of 19 and/or 6 by bars to a unit, when the reflector 2 is rotatably carried by means of a longitudinally extending shaft attached thereto and is retained in the centering unit 4 while being secured against movement in axial direction. The drive motor for rotating the reflector, however, should then be disposed at the end side of the reflector unit 4, which need not always be a drawback.

**Claims**

1. Apparatus for movably carrying monitoring means (2, 13) within the interior of a pipe-shaped body, comprising: a first bogie assembly (3); a second bogie assembly (4); wherein each of said assemblies includes a support (11, 12), a set of arms (17, 18, 19) pivotally coupled thereto and mounted for pivotal movement in unison, each of said arms having wheel means (30, 31, 32) rotatably mounted at its free end, and a spring biased mechanism (28, 29) commonly coupled to its associated set of arms for exerting such resilient forces thereon that a pivotal movement of said arms in a direction towards the longitudinal axis (15) of said support and caused by an internal pipe surface portion, is counteracted; and said monitoring means are adapted for transmitting and receiving a scanning beam of radiation for monitoring purposes, characterized in that each one of said arms (17, 18, 19) is mounted for pivotal movement relative to its associated support (11, 12) in a plane which is extending transversely relative to said longitudinal axis (15) of said support; and said monitoring means comprises a transducer (13) stationarily mounted relative to said support (11, 12) and adapted for transmitting and receiving said beam of radiation, and a reflector (2) spaced at a predetermined distance from said transducer and mounted for rotation around said longitudinal axis, said reflector being positioned midway between the two spaced transverse planes extending through the respective centers of rotation of said wheel means (31, 31'), said reflector being further arranged for defining a transmission path for said beams of radiation having a portion extending substantially perpendicular to said longitudinal axis.

2. Apparatus according to claim 1, characterized in that each one of said spring biased mechanisms include a spring (28, 29) extending in a plane transverse relative to said longitudinal axis (15) for exerting resilient forces in a transverse direction relative to said axis.

3. Apparatus according to claims 1 or 2, characterized in that each one of said bogie assemblies includes three arms (17, 18, 19).

**Patentansprüche**

1. Vorrichtung zum bewegbaren Tragen von Monitoreinrichtungen (2, 13) im Inneren eines rohrförmigen Körpers, mit einer ersten Drehgestellanordnung (3), einer zweiten Drehgestellanordnung (4), wobei jede dieser Anordnungen einen Träger (11, 12), einem Satz von schwenkbar an diesen angekoppelten Armen (17, 18, 19), die gemeinsam verschwenkt werden können, wobei jeder Arm Radmittel (30, 31, 32) aufweist, die an seinem freien Ende drehbar gelagert sind, und mit einem federnd vorgespannten Mechanismus (28, 29) der gewöhnlich an einen zugeordneten Satz von Armen angekoppelt ist, um derartige federnde Kräfte auf diesen auszuüben, daß einer Schwenkbewegung seinerArme in einer Richtung gegen die Längsachse (15) des Trägers und von einem Oberflächenabschnitt im Inneren des Rohres ausgelöst entgegengewirkt wird, wobei die Monitoreinrichtungen zum Aussenden und Empfangen eines Abtaststrahles einer Strahlung für Überwachungszwecke ausgelegt sind, dadurch gekennzeichnet, daß jeder der Arme (17, 18, 19) relativ zu seinem zugeordneten Träger (11, 12) in einer Ebene verschwenkbar gelagert ist, welche sich quer zur entsprechenden Längsachse (15) des Trägers erstreckt, und daß die Monitoreinrichtungen einen gegenüber dem Träger (11, 12) fest angeordneten Wandler (13), der zum Aussenden und Empfangen des Strahlungsstrahles dient, und einen Reflektor (2) aufweist, der in einer vorbestimmten Entfernung vom Wandler angeordnet und drehbar um die genannte Längsachse gelagert ist, wobei der Reflektor in der Mitte zwischen zwei im Abstand voneinander verlaufenden Querebenen angeordnet ist, die sich durch die entsprechenden Rotationsmittelpunkte der Radmittel (31, 31') erstrecken, wobei der Reflektor weiterhin so angeordnet ist, daß er einen Sendepfad für die Strehlungsstrahlen bestimmt, der einen Abschnitt aufweist, welcher sich im wesentlichen senkrecht zu der genannten Längsachse erstreckt.

2. Vorrichtung nach Anspruch 1, dadurch gekennzeichnet, daß jeder der federnd vorgespannten Mechanismen eine Feder (28, 29) aufweist, die sich in einer Ebene quer zu der Längsachse (15) erstreckt, um federnde Kräfte in einer Querrichtung zu der genannten Längsachse auszuüben.

3. Vorrichtung nach Anspruch 1 oder 2, dadurch
gekennzeichnet, daß jede der Drehgestellanordnungen drei Arme (17, 18, 19) aufweist.

## Revendications

1. Dispositif destiné à supporter de manière
mobile des moyens de surveillance (2, 13) à
l'intérieur d'un corps tubulaire, comprenant: un
premier ensemble de bogie (3); un second ensemble de bogie (4) chacun desdits ensembles
comportant un support (11, 12), un jeu de bras
(17, 13, 19) qui y est relié de manière pivotante et
qui est prévu pour pivoter de manière synchrone,
chacun desdits bras étant équipé de moyens de
roue (30, 31, 32) montés rotatifs à son extrémité
libre, et un mécanisme sollicité par ressort (28, 29)
qui est relié au jeu de bras correspondant pour y
exercer des forces élastiques de manière à compenser un mouvement de pivotement des bras
s'effectuant en direction de l'axe longitudinal (15)
dudit support et provoqué par une partie de la
surface intérieure du tube; lesdits moyens de
surveillance étant conçus pour transmettre et
recevoir un faisceau de rayonnement de balayage
permettant d'assurer une surveillance, caractérisé en ce que chacun desdits bras (17, 18, 19) est
monté pivotant par rapport au support correspondant (11, 12) dans un plan s'étendant transversalement audit axe longitudinal (15) dudit support;
et en ce que lesdits moyens de surveillance
comprennent un transducteur (13), qui est monté
fixe par rapport audit support (11, 12) et qui est
conçu pour transmettre et recevoir ledit faisceau
de rayonnement, et un réflecteur (2), qui est placé
à une distance prédéterminée dudit transducteur
et qui est monté rotatif autour dudit axe longitudinal, ledit réflecteur étant positionné à mi-distance
entre les deux plans transversaux espacés trans-
versant les centres de rotation respectifs desdits
moyens de roue (31, 31'), ledit réflecteur étant
également conçu pour définir un trajet de transmission pour lesdits faisceaux de rayonnement,
comportant une partie sensiblement perpendiculaire audit axe longitudinal.

2. Dispositif conforme à la revendication 1,
caractérisé en ce que chacun desdits mécanismes
sollicités par ressort comprend un ressort (28, 29)
s'étendant dans un plan transversal audit axe
longitudinal (15) pour exercer des forces élastiques transversalement audit axe.

3. Dispositif conforme aux revendications 1 ou
2, caractérisé en ce que chacun desdits ensembles de bogie comprend trois bras (17, 18, 19).

FIG. 1

FIG. 2

0 078 072

# FIG. 3